# EUROPÄISCHE PATENTSCHRIFT

(11) **EP 3 620 480 B1**
(45) Veröffentlichungstag und Bekanntmachung des Hinweises auf die Patenterteilung: **25.02.2026**
(21) Anmeldenummer: 19174416.8
(22) Anmeldetag: 14.05.2019
(51) Int. Cl.: C08G 18/71, C08G 18/18, C08G 18/32

(54) **ZINNFREIE KATALYSE VON SILAN-FUNKTIONALEN POLYURETHAN VERNETZERN**
TIN-FREE CATALYSIS OF SILANE-FUNCTIONAL POLYURETHANE CROSSLINKING
CATALYSE SANS ÉTAIN DES AGENTS DE RÉTICULATION DE POLYURÉTHANES SILANE FONCTIONNELS

(30) Priorität: 10.09.2018 EP 18193334
(43) Veröffentlichungstag der Anmeldung: 11.03.2020
(73) Patentinhaber: Evonik Operations GmbH, 45128 Essen (DE)
(72) Erfinder: Unkelhäußer, Tobias, 59348 Lüdinghausen (DE)
(74) Vertreter: Evonik Patent Association

(56) Entgegenhaltungen:
- WO-A1-2017/055418
- DE-A1- 102013 208 356

## Beschreibung

Die vorliegende Erfindung betrifft eine Zusammensetzung mindestens enthaltend A) ein Addukt aus Isocyanatosilanen an Hydroxy-funktionelle Verbindungen, B) einen zinnfreien Katalysator und C) ein Aminosilan, sowie ein Beschichtungsmittel, welches mindestens die Zusammensetzung enthält, und die Verwendung der Beschichtungsmittel.

Zur dauerhaft schützenden Beschichtung von Substraten werden heute in der Regel 2-komponentige Lacke auf Polyurethanbasis eingesetzt, die langsam bei Umgebungstemperatur sowie zügig bei erhöhten Temperaturen aushärten können. Sie bestehen typischerweise aus Lackharzen und Vernetzern, die jeweils mit funktionellen Gruppen ausgestattet sind und unter Vernetzung miteinander reagieren. Aufgrund der starken Abhängigkeit von Temperatur und Vernetzungsgeschwindigkeit und dem daraus resultierenden Zwang der Benutzung von zinnhaltigen, toxikologisch bedenklichen Katalysatoren besteht der Wunsch, alternative Beschichtungssysteme bereit zu stellen. Die Systeme sollen vornehmlich bei Raumtemperatur zügig härten können um einerseits kostenintensive Einbrenntechnologien einzusparen sowie Arbeitskosten zu reduzieren. Eine hohe Reaktivität sowie eine hohe Beständigkeit der ausgehärteten Beschichtungen gegenüber Chemikalien oder Witterungseinflüsse, aber auch gegen mechanische Beanspruchung sollen gleichwohl gewährleistet werden. Als technische Referenz sind die seit langem bekannten aliphatischen 2K- Polyurethansysteme (PUR) heranzuziehen.

Ein solches 2K-System beschreibt beispielsweise die DE 10 2007 013 262 A1. Es handelt sich hierbei aber um 2K-Systeme, die erst bei erhöhten Temperaturen ab 140°C zügig ausgehärtet werden können.

Die WO 2014/180623 A1 beschreibt ein silanhaltiges Beschichtungsmittel welches ausschließlich durch die Zugabe von zinnhaltigen Verbindungen bei Temperaturen im Bereich von 0°C bis 40°C zügige Vernetzungsgeschwindigkeiten gewährleisten kann.

Die aus dem Stand der Technik bekannten Systeme haben den Nachteil, dass diese entweder bei Raumtemperatur oder erhöhten Temperaturen aushärten sowie oft toxikologisch bedenkliche Zinnverbindungen enthalten, um eine ausreichende Vernetzungsgeschwindigkeit zu gewährleisten.

Aufgabe der vorliegenden Erfindung ist die Bereitstellung einer Zusammensetzung, welche vorzugsweise bei Temperaturen im Bereich von 0 °C bis 40 °C ausgehärtet werden kann, und zinnfrei ist. Die genannte Aufgabe wird durch Beschichtungsmittel der vorliegenden Erfindung gelöst.

Die zugrundeliegende Aufgabe der vorliegenden Erfindung konnte durch eine Zusammensetzung, welche mindestens A) ein Addukt aus Isocyanatosilanen an Hydroxy-funktionelle Verbindungen, B) einen zinnfreien Katalysator und C) ein Aminosilan enthält, gelöst werden.

Die erfindungsgemäßen Zusammensetzungen können insbesondere als Beschichtungsmittel verwendet werden. Es hat sich überraschend gezeigt, dass die erfindungsgemäßen Zusammensetzungen, welche mindestens die vorgenannten Komponenten A), B) und C) enthalten, bereits bei 0°C zu stabilen Beschichtungen führen, wenn sie als Beschichtungsmittel eingesetzt werden. Bei diesen erfindungsgemäßen Beschichtungsmitteln handelt es sich um einkomponentige Systeme (1K), die einfach zu applizieren sind. Aufgrund der niedermolekularen Anteile der Beschichtungsmittel sind diese im Hinblick auf eine spätere Anwendung ohne zusätzliche organische Lösungsmittel formulier- und verarbeitbar. Somit ist es möglich, einen VOC-Gehalt von unter 100 g/l zu realisieren.

Weiter hat sich überraschend gezeigt, dass die erfindungsgemäßen Zusammensetzungen, welche mindestens die vorgenannten Komponenten A), B) und C) enthalten, auch Ethoxybasierte Addukte aus Isocyanatosilanen an Hydroxyfunktionellen Verbindungen zügig bei Raumtemperatur härten können. Somit kann der latente Gehalt an Methanol des Gesamtsystems reduziert und das toxikologische Systemprofil weiter verbessert werden.

Bei der Komponente A) der erfindungsgemäßen Zusammensetzung bzw. des Beschichtungsmittels handelt es sich um Addukte aus Isocyanatosilanen an Hydroxy-funktionelle Verbindungen.

Vorzugsweise handelt es sich bei dem Isocyanatosilan um eine Verbindung der Formel (I)

OCN-(Alkyl)-Si(Alkoxy)₃ (I)

worin das Alkyl in vorstehender Formel (I) einer linearen oder verzweigten Alkylgruppe mit 1 bis 4 Kohlenstoffatomen und das Alkoxy in vorstehender Formel (I) gleichzeitig oder unabhängig voneinander einer Methoxy-, Ethoxy-, Propoxy- oder Butoxy-Gruppe, entspricht, wobei die drei Alkoxygruppen in der Verbindung der Formel (I) jeweils gleich oder unterschiedlich voneinander sein können.

Als Verbindungen der Formel (I) OCN-(Alkyl)-Si(Alkoxy)₃ eignen sich grundsätzlich alle der vorab beschriebenen möglichen Verbindungen. Besonders bevorzugt ist Alkoxy aber ausgewählt aus Methoxy- und Ethoxygruppen. Die drei Alkoxygruppen in der Verbindung der Formel (I) können dabei gleich oder unterschiedlich voneinander sein. Bevorzugt sind die Alkoxygruppen, in dem Fall, dass alle drei Alkoxygruppen gleich sind, jedoch keine Methoxygruppen. In einer ganz bevorzugten Ausführungsform sind alle drei Alkoxygruppen in der Verbindung der Formel (I) Ethoxygruppen.

Geeignete Verbindungen der Formel (I) sind insbesondere Isocyanatoalkylalkoxysilane, die ausgewählt sind aus der Gruppe umfassend 3-Isocyanatopropyltrimethoxysilan, 3-Isocyanatopropyltriethoxysilan, 3-Isocyanatopropyltriisopropoxysilan, 2-Isocyanatoethyltrimethoxysilan, 2-Isocyanatoethyltriethoxysilan, 2-Isocyanatoethyltriisopropoxysilan, 4-Isocyanatobutyltrimethoxysilan, 4-Isocyanatobutyltriethoxysilan, 4-Isocyanatobutyltriisopropoxysilane, Isocyanatomethyltrimethoxysilan, Isocyanatomethyltriethoxysilan, Isocyanatomethytriisopropoxysilan, 3-Isocyanatopropyldimethoxyethoxysilan und/oder 3-Isocyanatopropyldiethoxymethoxysilan.

Bevorzugt werden 3-Isocyanatopropyltrimethoxysilan, 3-Isocyanatopropyltriethoxysilan, 3-Isocyanatopropyldimethoxyethoxysilan und/oder 3-Isocyanatopropyldiethoxymethoxysilan, besonders bevorzugt 3-Isocyanatopropyltriethoxysilan, 3-Isocyanatopropyldimethoxyethoxysilan und/oder 3-Isocyanatopropyldiethoxymethoxysilan als Verbindung der Formel (I) (Komponente A) in den erfindungsgemäßen Zusammensetzungen bzw. Beschichtungsmitteln eingesetzt.

Die vorab genannten Isocyanatosilane liegen gebunden als Addukt an Hydroxy-funktionelle Verbindungen vor. Als entsprechende Hydroxy-funktionelle Verbindungen eignen sich einwertige oder mehrwertige Alkohole sowie Polyole.

Geeignete Hydroxy-funktionelle Verbindungen sind beispielsweise Mono-Alkohole oder Polyole, insbesondere Diole, Triole, Tetrole und Hydroxylgruppen-haltige Polymere. In einer bevorzugten Ausführungsform werden als Hydroxy-funktionelle Verbindungen Diole, Triole oder Tetrole, besonders bevorzugt Diole oder Triole, eingesetzt.

Im Falle der Mono-Alkohole handelt es sich insbesondere um monofunktionelle verzweigte oder lineare Alkohole oder Mischungen aus diesen mit 1 bis 20 Kohlenstoffatomen, bevorzugt 1 bis 12 Kohlenstoffatomen, besonders bevorzugt 1 bis 9 Kohlenstoffatome, insbesondere um Methanol, Ethanol, Propanol und Butanol.

Als Mono-Alkohole können auch Glykolether eingesetzt werden. Als Gykolether sind insbesondere Ethylenglykolmonoethylether, Ethylenglykolmonopropylether, Ethylenglykolmonoisopropylether, Ethylenglykolmonobutylether, Ethylenglykolmonophenylether, Ethylenglykoldimethylether, Diethylenglykolmonomethylether, Diethylenglykolmonoethylether, Diethylenglykolmonobutylether, Diethylenglykoldimethylether, 1,1'-Oxybis(2-Triethylenglykol)monomethylether, Triethylenglykolmonobutylether, Propylenglykol-1-methylether, Propylenglykol-2-methylether, Propylenglykol-1-ethylether und Propylenglykol-1-butylether geeignet.

Als Diole eignen sich insbesondere difunktionelle verzweigte oder lineare Alkohole oder Mischungen aus diesen mit 1 bis 20 Kohlenstoffatomen, bevorzugt 1 bis 12 Kohlenstoffatomen, besonders bevorzugt 1 bis 10 Kohlenstoffatomen.

Als Triole eignen sich besonders trifunktionelle verzweigte oder lineare Alkohole oder Mischungen aus diesen mit 1 bis 20 Kohlenstoffatomen, bevorzugt 1 bis 12 Kohlenstoffatomen, besonders bevorzugt 1 bis 10 Kohlenstoffatomen.

Als Tetrole eignen sich besonders tetrafunktionelle verzweigte oder lineare Alkohole oder Mischungen aus diesen mit 1 bis 20 Kohlenstoffatomen, bevorzugt 1 bis 12 Kohlenstoffatomen, besonders bevorzugt 1 bis 10 Kohlenstoffatomen.

Des Weiteren können Hydroxylgruppen-haltige Polymere mit einer OH-Zahl von 10 bis 500 mg KOH/Gramm und einer zahlenmittleren Molmasse von 250 bis 6000 g/Mol als Hydroxy-funktionelle Verbindungen eingesetzt werden, wobei die Hydroxylgruppen-haltige Polymere aus der Gruppe, bestehend aus Polyestern, Polyethern, Polyacrylaten, Polycarbonaten, Epoxidharzen, Cellulosederivaten, FEVE (Fluoroethylene Vinyl Ether), Alkyden und Polyurethanen, wobei die Polyurethane vorzugsweise aus Polyolen und Diisocyanat-Monomeren bestehen bzw. gebildet werden, ausgewählt werden. Bevorzugt werden Hydroxylgruppen-haltige Polyester und/oder Polyacrylate mit einer OH-Zahl von 20 bis 150 mg KOH/Gramm und einem zahlenmittleren Molekulargewicht von 500 bis 6000 g/mol eingesetzt.

Die Hydroxylzahl (OHZ) wird bestimmt nach DIN EN ISO 4629-2 (2016-12). Bei diesem Verfahren wird die Probe mit Essigsäureanhydrid in N-Methyl-2-pyrrolidon (NMP) in Gegenwart von 4-N-Dimethylaminopyridin in NMP als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Die zahlenmittleren Molekulargewichte werden nach DIN 55672-1 (2016-03) mittels Gelpermeationschromatographie in Tetrahydrofuran als Eluent und Polystyrol zur Kalibrierung bestimmt.

Darüber hinaus können auch Mischungen der oben genannten Hydroxyl-funktionellen Verbindungen eingesetzt werden.

In einer bevorzugten Ausführungsform werden als Hydroxy-funktionelle Verbindungen für das Addukt A) Diole, Triole oder Tetrole, besonders bevorzugt Diole oder Triole, eingesetzt.

Die Herstellung der Addukte A) kann lösemittelfrei oder unter Verwendung von nichtprotischen Lösemitteln durchgeführt werden, wobei die Umsetzung diskontinuierlich oder kontinuierlich erfolgen kann. Die Reaktion kann bei Raumtemperatur, das heißt bei Temperaturen im Bereich von 20 bis 25 °C, durchgeführt werden, bevorzugt werden jedoch höhere Temperaturen im Bereich 30 bis 150 °C, insbesondere im Bereich von 50 bis 100 °C verwendet. Zur Beschleunigung der Reaktion können vorteilhaft in der Urethanchemie bekannte Katalysatoren wie Sn-, Bi-, Zn- und andere Metallcarboxylate, tert.-Amine wie beispielsweise 1,4-Diazabicyclo[2.2.2]octan (DABCO), Triethylamin etc. eingesetzt werden. Die Reaktion wird bevorzugt unter Ausschluss von Wasser durchgeführt und unter Benutzung von zinnfreien Katalysatoren bspw. Bi-basierten Katalysatoren.

Die Umsetzung der Isocyanatosilane und der Hydroxy-funktionellen Verbindungen zur Bildung der Addukte A) erfolgt dabei insbesondere derart, dass das Verhältnis von OH-Gruppen aus den Hydroxy-funktionellen Verbindungen zu NCO-Gruppen aus den Isocyanatosilanen im Addukt A) von 0,8 : 1 bis 1,2 : 1, bevorzugt 0,9 : 1 bis 1,1 : 1, beträgt, wobei die stöchiometrische Umsetzung (1 : 1) ganz besonders bevorzugt ist. In einer ganz besonders bevorzugten Ausführungsform wird eine vollständige Umsetzung aller OH-Gruppen der Hydroxy-funktionellen Verbindungen mit NCO-Gruppen der Isocyanatosilane, insbesondere jene der Verbindungen der Formel (I), erreicht.

In Abhängigkeit der gewählten Stöchiometrie beider Reaktionspartner kann das erhaltene Addukt A) noch freie Hydroxyl- oder Isocyanatgruppen enthalten. Die Addukte A) sind vorzugsweise jedoch frei von NCO-Gruppen. In diesem Zusammenhang ist die Formulierung "frei von NCO-Gruppen" so zu verstehen, dass die erfindungsgemäße Zusammensetzung bzw. das erfindungsgemäße Beschichtungsmittel ≤ 0,5 % freie NCO-Gruppen, bevorzugt ≤ 0,05 % freie NCO-Gruppen, weiterhin bevorzugt ≤ 0,01% freie NCO-Gruppen und besonders bevorzugt keine freien NCO-Gruppen enthält. Die Prozentangabe bezieht sich auf die Gesamtmenge an NCO-Gruppen des eingesetzten Isocyanatosilans.

Bei der genannten Umsetzung reagieren die NCO-Gruppen der Isocyanatosilane mit den OH-Gruppen der Hydroxy-funktionellen Verbindungen unter Ausbildung von NH-CO-O-Gruppen, die die genannten Verbindungen miteinander verknüpfen .Die dadurch erhaltenen Addukte A) sind insbesondere bei Temperaturen bei und oberhalb von 0 °C flüssig, auch in lösemittelfreier Form. Es handelt sich also vorzugsweise um nicht kristallisierende, eher niedermolekulare Verbindungen.

Die Addukte A) sind in lösemittelfreier Form niedrig- bis hochviskos, d.h. sie weisen eine Viskosität im Bereich von 10 bis 40000 mPa·s, vorzugsweise im Bereich von 50 bis 18000 mPa·s (DIN EN/ISO 3219 (1994-10) bei 23 °C) auf. Zwecks besserer Handhabbarkeit können die Produkte zusätzlich mit Lösemitteln, die wie Alkohole auch protisch sein können, versetzt sein. Die Festkörpergehalte derartiger Zubereitungen betragen vorzugsweise > 80 Gew.-% und weisen dabei bevorzugt eine maximale Viskosität von 1000 mPa·s (DIN EN/ISO 3219 (1994-10) bei 23 °C) auf.

Die Menge an Komponente A) in der erfindungsgemäßen Zusammensetzung bzw. in dem erfindungsgemäßen Beschichtungsmittel beträgt bevorzugt 10 bis 90 Gew.-%, insbesondere bevorzugt 10 bis 80 Gew.-%, jeweils bezogen auf die gesamte Zusammensetzung bzw. das gesamte Beschichtungsmittel.

Bei der Komponente B) der erfindungsgemäßen Zusammensetzung bzw. des erfindungsgemäßen Beschichtungsmittels handelt es sich um einen zinnfreien Katalysator. Damit ist die erfindungsgemäße Zusammensetzung bzw. das erfindungsgemäße Beschichtungsmittel vorzugsweise insgesamt zinnfrei. Zinnfrei im Sinne der vorliegenden Erfindung ist so zu verstehen, dass der erfindungsgemäßen Zusammensetzung bzw. dem erfindungsgemäßen Beschichtungsmittel keine Zinnverbindung (beispielsweise als Katalysator) zugesetzt wird, Zinnverbindungen aber in Kleinstmengen (≤ 0,01 Gew.-% bezogen auf die gesamte Zusammensetzung) als Verunreinigung aus dem vorherigen Herstellverfahren der Komponenten in das Beschichtungsmittels eingetragen werden können.

Als zinnfreie Katalysatoren B) werden Alkylammoniumhalogenide oder Mischungen verschiedener Alkylammoniumhalogenide in den erfindungsgemäßen Zusammensetzungen bzw. erfindungsgemäßen Beschichtungsmitteln verwendet.

Als Katalysator können auch Alkylammoniumhalogenide oder Mischungen verschiedener Alkylammoniumhalogenide eingesetzt werden. Die Alkylgruppen können dabei 1 bis 6 Kohlenstoffatome aufweisen. Bevorzugte Alkylammoniumhalogenide sind Alkylammoniumfluoride, besonders bevorzugt quartäre Alkylammoniumfluoride, wobei die Alkylgruppen dabei 1 bis 6 Kohlenstoffatome aufweisen können. Als ganz besonders bevorzugte Alkylammoniumfluoride können Tetramethylammoniumfluorid (TMAF), Tetraethylammoniumfluorid (TEAF), Tetrapropylammoniumfluorid (TPAF) und Tetrabutylammoniumfluorid (TBAF) eingesetzt werden. Bevorzugt werden die genannten Alkylammoniumfluoride in Form ihrer Hydrate, beispielsweise dem Trihydrat, eingesetzt. Die Alkylammoniumhalogenide können insbesondere als Lösung in einem C1 bis C6-Alkohol, insbesondere Methanol, Ethanol, Propanol, Butanol, Pentanol oder Hexanol zur Zusammensetzung hinzugefügt werden.

Die Menge des zinnfreien Katalysators B) in der erfindungsgemäßen Zusammensetzung bzw. in dem erfindungsgemäßen Beschichtungsmittel beträgt insbesondere 0,01 bis 3,0 Gew.-%, vorzugsweise 0,1 bis 1 Gew.-%, jeweils bezogen auf die gesamte Zusammensetzung bzw. das gesamte Beschichtungsmittel

Bei der Komponente C) der erfindungsgemäßen Beschichtungsmittel handelt es sich um ein Aminosilan. Insbesondere handelt es sich bei dem Aminosilan um Aminoalkylsilane der allgemeinen Formel (III)

AₘSiYₙ (III),

worin A eine substituierte oder unsubstituierte Aminoalkylgruppe, eine substituierte oder unsubstituierte Diaminodialkylgruppe oder eine substituierte oder unsubstituierte Triaminotrialkylgruppe darstellt; die Gruppe Y jeweils unabhängig voneinander OH, OR', OCOR', OSiR'₃, Cl, Br, I oder NR'₂ ist; m gleich 1 oder 2; und n gleich 1, 2 oder 3 ist, mit der Maßgabe, dass m + n = 4; wobei die Gruppe R' jeweils unabhängig voneinander Wasserstoff oder eine lineare oder verzweigte Alkyl-, Cycloalkyl-, Alkenyl-, Cycloalkenyl-, Alkinyl-, Cycloalkinyl-, Aryl- oder Heteroarylgruppe ist, die jeweils 1 bis 18 C-Atomen aufweist und jeweils ggf. substituiert sein kann.

Vorzugsweise ist m gleich 1 und n gleich 3. Weiterhin bevorzugt ist Y ausgewählt aus OH oder OR', wobei OR' besonders bevorzugt ist. In diesem Falle ist R' insbesondere ausgewählt aus Methyl- oder Ethylgruppen, wobei Methylgruppen insbesondere bevorzugt sind.

Solche Aminosilane oder Aminoalkylsilane sind beispielsweise, aber nicht ausschließlich, 3-Aminopropyltrimethoxysilan, 3-Aminopropyltriethoxysilan, 2-Aminoethyl-3-aminopropyltrimethoxysilan, 3-Aminopropyl(diethoxymethoxysilan), 3-Aminopropyl(tripropoxysilan), 3-Aminopropyl(dipropoxymethoxysilan), 3-Aminopropyl(tridodecanoxysilan), 3-Aminopropyl(tritetradecanoxysilan), 3-Aminopropyl(trihexadecanoxysilan), 3-Aminopropyl(trioctadecanoxysilan), 3-Aminopropyl(didodecanoxy)tetradecanoxysilan, 3-Aminopropyl(dodecanoxy)-tetradecanoxy(hexadecanoxy)silan, 3-Aminopropyl(dimethoxymethylsilan), 3-Aminopropyl(methoxydimethylsilan), 3-Aminopropyl(hydroxydimethylsilan), 3-Aminopropyl(diethoxymethylsilan), 3-Aminopropyl(ethoxydimethylsilan), 3-Aminopropyl(dipropoxymethylsilan), 3-Aminopropyl(propoxydimethylsilan), 3-Aminopropyl(diisopropoxymethylsilan), 3-Aminopropyl(isopropoxydimethylsilan), 3-Aminopropyl(dibutoxymethylsilan), 3-Aminopropyl(butoxydimethylsilan), 3-Aminopropyl(disiobutoxymethylsilan), 3-Aminopropyl(isobutoxydimethylsilan), 3-Aminopropyl(didodecanoxymethylsilan), 3-Aminopropyl(dodecanoxydimethylsilan), 3-Aminopropyl(ditetradecanoxymethylsilan), 3-Aminopropyl(tetradecanoxy-dimethylsilan), 2-Aminoethyl(trimethoxysilan), 2-Aminoethyl(triethoxysilan), 2-Aminoethyl(diethoxymethoxysilan), 2-Aminoethyl(tripropoxysilan), 2-Aminoethyl(dipropoxymethoxysilan), 2-Aminoethyl(tridodecanoxysilan), 2-Aminoethyl(tritetradecanoxysilan), 2-Aminoethyl(trihexadecanoxysilan), 2-Aminoethyl(trioctadecanoxysilan), 2-Aminoethyl(didodecanoxy)tetradecanoxysilan, 2-Aminoethyl(dodecanoxy)tetradecanoxy(hexadecanoxy)silan, 2-Aminoethyl(dimethoxymethylsilan), 2-Aminoethyl(methoxydimethylsilan), 2-Aminoethyl(diethoxymethylsilan), 2-Aminoethyl(ethoxydimethylsilan), 1-Aminomethyl(trimethoxysilan), 1-Aminomethyl(triethoxysilan), 1-Aminomethyl(diethoxymethoxysilan), 1-Aminomethyl(dipropoxymethoxysilan), 1-Aminomethyl(tripropoxysilan), 1-Aminomethyl(trimethoxysilan), 1-Aminomethyl(dimethoxymethylsilan), 1-Aminomethyl(methoxydimethylsilan), 1-Aminomethyl(diethoxymethylsilan), 1-Aminomethyl(ethoxydimethylsilan), 3-Aminobutyl(trimethoxysilan), 3-Aminobutyl(triethoxysilan), 3-Aminobutyl(diethoxymethoxysilan), 3-Aminobutyl(tripropoxysilan), 3-Aminobutyl(dipropoxymethoxysilan), 3-Aminobutyl(dimethoxymethylsilan), 3-Aminobutyl(diethoxymethylsilan), 3-Aminobutyl(dimethylmethoxysilan), 3-Aminobutyl(dimethylethoxysilan), 3-Aminobutyl(tridodecanoxysilan), 3-Aminobutyl(tritetradecanoxysilan), 3-Aminobutyl(trihexadecanoxysilan), 3-Aminobutyl(didodecanoxy)tetradecanoxysilan, 3-Aminobutyl(dodecanoxy)tetra-decanoxy(hexadecanoxy)silan, 3-Amino-2-methyl-propyl(trimethoxysilan), 3-Amino-2-methylpropyl(triethoxysilan), 3-Amino-2-methyl-propyl(diethoxymethoxysilan), 3-Amino-2-methylpropyl(tripropoxysilan), 3-Amino-2-methyl-propyl(dipropoxymethoxysilan), 3-Amino-2-methylpropyl(tridodecanoxysilan), 3-Amino-2-methyl-propyl(tritetradecanoxysilan), 3-Amino-2-methyl-propyl(trihexadecanoxysilan), 3-Amino-2-methyl-propyl(trioctadecanoxysilan), 3-Amino-2-methyl-propyl(didodecanoxy)tetradecanoxysilan, 3-Amino-2-methylpropyl(dodecanoxy)tetradecanoxy(hexadecanoxy)silan, 3-Amino-2-methylpropyl(dimethoxymethylsilan), 3-Amino-2-methyl-propyl(methoxydimethylsilan), 3-Mercapto-2-methyl-propyl(diethoxymethylsilan), 3-Mercapto-2-methyl-propyl(ethoxydimethylsilan), 3-Mercapto-2-methyl-propyl(dipropoxymethylsilan), 3-Amino-2-methylpropyl(propoxydimethylsilan), 3-Amino-2-methyl-propyl(diisopropoxymethylsilan), 3-Amino-2-methyl-propyl(isopropoxydimethylsilan), 3-Amino-2-methyl-propyl(dibutoxymethylsilan), 3-Amino-2-methyl-propyl(butoxydimethylsilan), 3-Amino-2-methylpropyl(disiobutoxymethylsilan), 3-Amino-2-methyl-propyl(isobutoxydimethylsilan), 3-Amino-2-methyl-propyl(didodecanoxymethylsilan), 3-Amino-2-methyl-propyl(dodecanoxy-dimethylsilan), 3-Amino-2-methyl-propyl(ditetradecanoxymethylsilan) oder 3-Amino-2-methylpropyl (tetradecanoxydimethyl-silan), triaminofunktionelles Propyltrimethoxysilan, Bis(3-trimethoxysilylpropyl)-amin, Bis(3-triethoxysilylpropyl)-amin, N-Benzyl-N-(2-aminoethyl)-3-aminopropyltrimethoxysilan-Hydrochlorid, N-Benzyl-N-(2-aminoethyl)-3-aminopropyltrimethoxysilan-Hydroacetat, N-(n-Butyl)-3-aminopropyltrimethoxysilan, 3-Aminopropylmethyldiethoxysilan, N-Vinylbenzyl-N-(2-aminoethyl)-3-aminopropylpolysiloxan und N-(2-Aminoethyl)-3-aminopropylmethyldimethoxysilan.

Bevorzugte Aminosilane oder Aminoalkylsilane sind substituierte oder unsubstituierte Aminosilan-Verbindungen, insbesondere 3-Aminopropyltrimethoxysilan, 3-Aminopropyltriethoxysilan, 3-Aminopropylmethyldiethoxysilan, N-(2-Aminoethyl)-3-aminopropyltrimethoxysilan, 2-Aminopropyl-3-aminopropyltrimethoxysilan, 2-Aminopropyl-3-aminopropyltriethoxysilan, 2-Aminoethyl-2-aminoethyl-3-aminopropyltrimethoxysilan, 2-Aminoethyl-2-aminoethyl-3-aminopropyltriethoxysilan und N-(n-Butyl)-3-aminopropyltrimethoxysilan. Besonders bevorzugt werden 3-Aminopropyltrimethoxysilan (DYNASYLAN^{®} AMMO), 3-Aminopropyltriethoxysilan (DYNASYLAN^{®} AMEO), 3-Aminopropylmethyldiethoxysilan (DYNASYLAN^{®} 1505), N-(n-Butyl)-3-aminopropyltrimethoxysilan (DYNASYLAN^{®} 1189) und N-(2-Aminoethyl)-3-aminopropyltrimethoxysilan (DYNASYLAN^{®} DAMO), (H3CO)3Si(CH2)3NH(CH2)3Si(OCH3)3 (Bis-AMMO), (H5C2O)3Si(CH2)3NH(CH2)3Si(OC2H5)3 (Bis-AMEO), (H3CO)3Si(CH2)3NH(CH2)2NH(CH2)2NH(CH2)3Si(OCH3)3 (Bis-DAMO), jeweils der Fa. Evonik Industries AG, als Aminosilane C) eingesetzt.

Die Menge an Komponente C) in der erfindungsgemäßen Zusammensetzung bzw. in dem erfindungsgemäßen Beschichtungsmittel beträgt 5 bis 30 Gew.-%, bevorzugt 10 bis 20 Gew.-%, jeweils bezogen auf die gesamte Zusammensetzung bzw. das gesamte Beschichtungsmittel.

Die erfindungsgemäße Zusammensetzung kann wie erwähnt ausschließlich aus den Komponenten A), B) und C) bestehen, frei von Bindemitteln sein und als Beschichtungsmittel eingesetzt werden. Das Beschichtungsmittel ist dann ein einkomponentiges Beschichtungsmittel (1K), bestehend aus der erfindungsgemäßen Zusammensetzung.

Gegenstand der Erfindung ist demnach ein 1K-Beschichtungsmittel, welches mindestens die erfindungsgemäße Zusammensetzung (mindestens enthaltend die oder bestehend aus den Komponenten A), B) und C)) jedoch kein Bindemittel umfasst. In einer bevorzugten Ausführungsform enthält das 1K-Beschichtungsmittel zusätzlich mindestens einen Hilfs-und/oder Zusatzstoff und/oder mindestens ein Lösemittel.

Das Lösemittel ist vorzugsweise ein organisches Lösemittel, beispielsweise Ketone, Ester, Alkohole oder Aromaten. Das Lösemittel kann vorzugsweise in Mengen von 1 bis zu 50 Gew.-%, insbesondere 5 bis 75 Gew.-%, jeweils bezogen auf das gesamte Beschichtungsmittel, in dem erfindungsgemäßen 1K-Beschichtungsmittel enthalten sein. Die Menge der Lösemittel orientiert sich an der einzustellenden Applikationsviskosität des Beschichtungsmittels.

Das 1K-Beschichtungsmittel kann Hilfsstoffe und/oder Zusatzstoffe wie Stabilisatoren, Lichtschutzmittel, Pigmente, Füllstoffe, Verlaufsmittel oder Rheologiehilfsmittel, wie z. B. sog. "sag control agents", Mikrogele oder pyrogenes Siliciumdioxid, aber in typischen Konzentrationen enthalten. Die Hilfsstoffe und/oder Zusatzstoffe können im Falle von pigmentfreien Beschichtungsmitteln, vorzugsweise in Mengen von 0,01 bis zu 90 Gew.-%, insbesondere 0,1 bis 20 Gew.-%, jeweils bezogen auf das gesamte Beschichtungsmittel, in dem erfindungsgemäßen Beschichtungsmittel enthalten sein. Im Falle von pigment- und/oder füllstoffhaltigen Beschichtungsmitteln kann der Gehalt von Hilfsstoffen und/oder Zusatzstoffen 0,01 bis 99 Gew.-%, insbesondere 0,1 bis 90 Gew.-%, jeweils bezogen auf das gesamte Beschichtungsmittel, betragen.

Das erfindungsgemäße Beschichtungsmittel kann aber auch Bindemittel-Komponenten enthalten. Dadurch ergibt sich ein zweikomponentiges (2K-)Beschichtungsmittel. Die zwei Komponenten (im vorliegenden Fall gilt die Zusammensetzung aus zumindest A), B) und C) als eine Komponente und das Bindemittel als die andere Komponente) werden getrennt voneinander aufbewahrt und erst bei der Applikation miteinander vermischt da die Bindemittel nur in Ausnahmefällen mit der Zusammensetzung aus zumindest den Komponenten A), B) und C) stabil gelagert werden können.

Gegenstand der Erfindung ist demnach auch ein 2K-Beschichtungsmittel, welches mindestens die erfindungsgemäße Zusammensetzung, die mindestens die Komponenten A), B), C) enthält oder daraus besteht, und mindestens eine Bindemittel-Komponente umfasst. In einer bevorzugten Ausführungsform enthält das 2K-Beschichtungsmittel zusätzlich mindestens einen Hilfs- und/oder Zusatzstoff und/oder mindestens ein Lösemittel.

Grundsätzlich eignen sich als Bindemittel-Komponenten alle dem Fachmann bekannten Arten von Bindemitteln, beispielsweise auch thermoplastische, das heißt nicht vernetzbare Bindemittel, die üblicherweise ein mittleres Molekulargewicht > 10000 g/mol aufweisen. Bevorzugt werden jedoch Bindemittel, die über reaktive funktionelle Gruppen mit aciden Wasserstoffatomen verfügen, eingesetzt. Geeignete Bindemittel der genannten Art weisen beispielsweise mindestens eine, bevorzugt jedoch zwei oder mehr Hydroxylgruppen auf. Weitere geeignete funktionelle Gruppen des Bindemittels sind beispielsweise Trialkoxysilan-Funktionalitäten.

Als Bindemittel mit funktionellen Gruppen werden bevorzugt Hydroxylgruppen-haltige Polymere, insbesondere Hydroxylgruppen-haltige Polyester, Polyether, Polyacrylate, Polycarbonate und Polyurethane mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyester oder Polyacrylate mit einer OH-Zahl von 20 bis 150 mg KOH/g und einem mittleren Molekulargewicht von 500 bis 6000 g/mol als Bindemittelkomponenten eingesetzt.

Als hydroxylgruppenhaltige (Meth)acryl-Copolymerisate können Harze mit einer Monomerzusammensetzung, wie sie z. B. in der DE 195 29124 C1 beschrieben sind, verwendet werden. Dabei sollte die durch anteilige Verwendung von (Meth)acrylsäure als Monomer einzustellende Säurezahl des (Meth)acryl-Copolymerisates 0 bis 30, vorzugsweise 3 bis 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000 bis 20000 g/mol, die Glasübergangstemperatur beträgt vorzugsweise - 40°C bis + 60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 70 bis 250 mg KOH/g, besonders bevorzugt 90 bis 190 mg KOH/g.

Erfindungsgemäß geeignete Polyesterpolyole sind Harze mit einer Monomerzusammensetzung aus Di- und Polycarbonsäuren und Di- und Polyolen, wie sie in WO 93/15849 A1 beschrieben sind. Als Polyesterpolyole können auch Polyadditionsprodukte von Caprolacton an niedermolekulare Di- und Triole, wie sie z. B. unter der Bezeichnung CAPA^{®} (Perstorp) erhältlich sind, eingesetzt werden. Das rechnerisch bestimmte zahlenmittlere Molgewicht beträgt vorzugsweise 500 bis 5000 g/mol, besonders bevorzugt 800 bis3000 g/mol, die mittlere Funktionalität beträgt vorzugsweise 2,0 bis 4,0, bevorzugt 2,0 bis 3,5.

Als erfindungsgemäß zu verwendende urethan- und estergruppenhaltige Polyole kommen prinzipiell auch solche zum Einsatz, wie sie in EP 0 140 186 A2 beschrieben sind. Bevorzugt werden urethan- und estergruppenhaltige Polyole, zu deren Herstellung HDI, IPDI, Trimethylhexamethylendiisocyanat (TMDI) oder (H₁₂-MDI) verwendet werden, eingesetzt. Das zahlenmittlere Molgewicht beträgt vorzugsweise 500 bis 2000 g/mol, die mittlere Funktionalität liegt insbesondere im Bereich von 2,0 bis 3,5.

Selbstverständlich können auch Mischungen der vorab beschriebenen Bindemittel eingesetzt werden. Bevorzugte Bindemittel sind Hydroxylgruppen-haltige Polyester und Polyacrylate, allein oder in Mischungen.

Der Anteil etwaiger zusätzlicher Bindemittel in dem erfindungsgemäßen Beschichtungsmittel kann insbesondere 5 bis 60 Gew.-%, bezogen auf das gesamte Beschichtungsmittel, insbesondere 10 bis 40 Gew.-% betragen.

Das erfindungsgemäße 2K-Beschichtungsmittel mit Bindemittel kann zusätzlich in der Lacktechnologie bekannte Hilfsstoffe und/oder Zusatzstoffe wie Stabilisatoren, Lichtschutzmittel, Pigmente, Füllstoffe, Verlaufsmittel oder Rheologiehilfsmittel, wie z. B. sog. "sag control agents", Mikrogele oder pyrogenes Siliciumdioxid, in typischen Konzentrationen enthalten. Falls erforderlich, können in dem erfindungsgemäßen Beschichtungsmittel auch in der Lacktechnologie übliche anorganische oder organische Farb- und/oder Effektpigmente eingearbeitet werden.

Die Hilfsstoffe und/oder Zusatzstoffe können im Falle von pigmentfreien Beschichtungsmitteln, vorzugsweise in Mengen von 0,01 bis zu 90 Gew.-%, insbesondere 0,1 bis 20 Gew.-%, jeweils bezogen auf das gesamte Beschichtungsmittel, in dem erfindungsgemäßen Beschichtungsmittel enthalten sein. Im Falle von pigment- und/oder füllstoffhaltigen Beschichtungsmitteln kann der Gehalt von Hilfsstoffen und/oder Zusatzstoffen 0,01 bis 99 Gew.-%, insbesondere 0,1 bis 90 Gew.-%, jeweils bezogen auf das gesamte Beschichtungsmittel, betragen.

Das optional vorhandene Lösemittel für das 2K-Beschichtungsmittel mit Bindemittel ist vorzugsweise ein organisches Lösemittel, beispielsweise Ketone, Ester, Alkohole oder Aromaten. Das Lösemittel kann vorzugsweise in Mengen von 1 bis zu 50 Gew.-%, insbesondere 5 bis 75 Gew.-%, jeweils bezogen auf das gesamte Beschichtungsmittel, in dem erfindungsgemäßen Beschichtungsmittel enthalten sein. Die Menge der Lösemittel orientiert sich an der einzustellenden Applikationsviskosität des Beschichtungsmittels.

Die Summe der Anteile aller Komponenten der Zusammensetzung oder des Beschichtungsmittels, also zumindest der Komponenten A), B) und C), sowie der zusätzlich möglichen Bindemittel, Hilfs- und/oder Zusatzstoffe und Lösemittel ergibt immer 100 Gew.-%.

Die Herstellung der erfindungsgemäßen Zusammensetzungen bzw. der erfindungsgemäßen Beschichtungsmittel erfolgt durch Mischung aller vorab beschriebenen Komponenten, also zumindest der Komponenten A), B) und C). Das Mischen kann in dem Fachmann bekannten Mischern erfolgen, beispielsweise Rührbehältern, Dissolvern, Perlmühlen, Walzenstühlen, etc., aber auch kontinuierlich mittels Statikmischern.

Ein weiterer Gegenstand der Erfindung ist die Verwendung von 1K- oder 2K-Beschichtungsmitteln, die mindestens die erfindungsgemäße Zusammensetzung enthalten, wobei die Beschichtungsmittel insbesondere bei Temperaturen von 0 °C bis 40 °C härtbar sind, zur Beschichtung von Holz, Kunststoff, Glas oder Metall.

Die auf Basis der vorab genannten Beschichtungsmittel erhaltenen Beschichtungen sind gekennzeichnet durch eine hohe Beständigkeit gegenüber mechanischer Beanspruchung. Darüber hinaus zeigen sie eine sehr gute Beständigkeit gegenüber Chemikalien, eine außergewöhnlich gute Witterungsbeständigkeit und eine sehr gute Balance zwischen Härte und Flexibilität.

Beschichtungen enthaltend die erfindungsgemäßen Beschichtungsmittel sind ebenfalls Gegenstand der vorliegenden Erfindung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert.

### Beispiele:

### Beispiel 1): Herstellung von Beschichtungsmitteln (1K)

Die einzelnen Stoffe werden, je nach Rezeptur, nacheinander in eine Glasflasche gegeben und verrührt bis sich eine homogene gut durchmischte Lösung bildet. Die verwendeten Alkylammoniumhalogenide TMAF und TBAF wurden vor der Zugabe zur Zusammensetzung in Ethanol gelöst (10%ige Lösung von TMAF und TBAF). Allen Beschichtungsmittel wurde ein Verlaufsmitte (Tego Glide 410 / 10%ig in n-Butylacetat) hinzugefügt.

### Herstellung der Beschichtungen:

Die wie vorher beschrieben hergestellten Zusammensetzungen werden mittels eines Rakels mit einer Nassschichtdicke von etwa 120 µm auf Prüfbleche (Chemetall Group / Gardobond 26S 60 OC) aufgetragen. Eine Übersicht über die hergestellten Zusammensetzungen findet sich in Tabelle 1. Alle Mengen sind in Gewichtsprozent angegeben.

Nach dem Auftrag werden die Prüfbleche mit der Beschichtung in einem klimatisierten Raum bei 23°C und einer relativen Luftfeuchte von 50% gelagert. Nach einem Tag wird die Pendelhärte (nach König) an den hergestellten Beschichtungen bestimmt. Zusätzlich dazu wird direkt nach Applikation der Beschichtung die Staubtrockenzeit erfasst.

Die Grundlage der Pendelhärte ist, dass die Schwingungsamplitude eines sich aufstützenden Pendels umso schneller abnimmt, je stärker der Untergrund dämpft und die Schwingungsenergie absorbiert wird. Die Probenplatte (mit Beschichtung) wird auf dem Hubteller platziert. Mit dem von außen bedienbarem Hebelarm wird der Hubteller anschließend an das Pendel gefahren. Dieses wird bis zur Skalenposition 6° ausgelenkt und dem Drahtauslöser fixiert und anschließend gelöst. Ermittelt wird die Anzahl der Schwingungen, die das Pendel zum Abklingen von 6° auf 3° zur Senkrechten benötigt. Durch Multiplikation der Schwingungen mit dem Faktor 1,4 wird die Pendeldämpfung nach König in Sekunden errechnet. Die Messung wird innerhalb der Probe an 2 verschiedenen Stellen durchgeführt und der Mittelwert errechnet.

Die Bestimmung der Trocknungszeit des Beschichtungsstoffs erfolgt durch Bestimmung der Staubtrockenzeit angelehnt an EN ISO 9177 (3:2010).

Hierzu wird das Beschichtungssubstrat mit dem zu prüfenden Lack in der Zielschichtdicke beschichtet. Der Zeitpunkt wird notiert. Im Abstand von 10min. werden ca. 0,3 bis 0,5 g schwere Glasperlen (Glasperlen Ø: 250-500 µm / Hersteller: Carl-Roth GmbH + Co. KG) mit einem kleinen Löffel/Spatel aus 0,5cm Höhe auf einen Punkt vorsichtig auf die Beschichtung gestreut (Durchmesser des Glasperlenhaufens ca. 1,5 bis 2,0 cm). Für jede 10 min wird ein neuer glasperlenfreier Punkt mit Glasperlen beaufschlagt. Bei schnellen Systemen wird die Zeitspanne auf 5 min verringert, bei langsamen beträgt sie anfänglich 15 bis 30 min. erhöht. Gegen Ende der Härtungsdauer werden die Zeitabstände dann aber wieder auf 10 min. verkürzt. Für jeden Punkt wird die Zeitspanne seit dem Auftragen der Beschichtung notiert. Wirkt der Lack optisch getrocknet, werden die Glasperlen mittels einem weichem Haarpinsel vom Blech gewischt und die Zeit festgehalten, zum Zeitpunkt an dem keine Glasperlen auf der Lackoberfläche haften. Sofern Glasperlen an der Lackoberfläche haften, wird der Test fortgeführt.

Die erhaltenen Ergebnisse für die hergestellten Beschichtungen sind in Tabelle 2 dargestellt.

**Tabelle 1: Übersicht über die hergestellten Zusammensetzungen von Beispiel 1)**

| | A* | B* | C* | D* | E* | F* | G* | H | I | J | K |
|---|---|---|---|---|---|---|---|---|---|---|---|
| VESTANAT EP-M 60 (1) | 89,41 | | 89,41 | 89,41 | 89,41 | 89,41 | 89,41 | 88,69 | 88,69 | | |
| VESTANAT EP-E 95 (2) | | 89,41 | | | | | | | | 84,50 | 84,50 |
| Dynasylan AMMO (3) | 10,00 | 10,00 | 10,00 | 10,00 | 10,00 | 10,00 | 10,00 | 10,00 | 10,00 | 10,00 | 10,00 |
| TIB Kat 218 (4) | 0,09 | 0,09 | | | | | | | | | |
| Tego Glide 410 (5) | 0,05 | 0,05 | 0,05 | 0,05 | 0,05 | 0,05 | 0,05 | 0,05 | 0,05 | 0,05 | 0,05 |
| Hordaphos MOB (6) | | | 0,09 | | | | | | | | |
| Hordaphos MDB (7) | | | | 0,09 | | | | | | | |
| Polycat DBU (8) | | | | | 0,09 | | | | | | |
| TMG (9) | | | | | | 0,09 | | | | | |
| K-KAT XK-678 (10) | | | | | | | 0,09 | | | | |
| TMAF (11) | | | | | | | | 0,09 | | 0,5 | |
| TBAF*3H₂O (12) | | | | | | | | | 0,09 | | 0,5 |
| Ethanol | | | | | | | | 0,72 | 0,72 | 4,5 | 4,5 |
| n-Butylacetat | 0,45 | 0,45 | 0,45 | 0,45 | 0,45 | 0,45 | 0,45 | 0,45 | 0,45 | 0,45 | 0,45 |

| | | | | | | | | | | | |
|---|---|---|---|---|---|---|---|---|---|---|---|
| Die mit * gekennzeichneten Zusammensetzungen sind Vergleichsbeispiele (1) VESTANAT EP-M 60, Addukt aus 3-Isocyanatopropyltrimethoxysilan und 1,6-Hexandiol (Verhältnis 3-Isocyanatopropyltrimethoxysilan zu 1,6-Hexandiol entspricht 2:1) (2) VESTANAT EP-E 95, Addukt aus 3-Isocyanatopropyltriethoxysilan und 1,6-Hexandiol (Verhältnis 3-Isocyanatopropyltriethoxysilan zu 1,6-Hexandiol entspricht 2:1) (3) Dynasylan AMMO, 3-Aminopropyltrimethoxysilan der Evonik Resource Efficiency GmbH (4) TIB Kat 218, Dibutyltzinndilaurate, TIB Chemicals AG (5) Tego Glide 410, Polyether Siloxan Copolymer, Evonik Resource Efficiency GmbH (6) Hordaphos MOB, Phosphorsäurebutylester, Clariant (7) Hordaphos MDB, Phosphorsäurebutylester, Clariant (8) Polycat DBU, Diazabicycloundecen, Evonik Resource Efficiency GmbH (9) Tetramethylguanidin, Merck Millipore (10) K-KAT XK-678, Alkyl Säure Phosphat, King Industries (11) Tetramethylammoniumfluorid, Sigma Aldrich (12) Tetrabutylammoniumfluorid Trihydrat, Sigma Aldrich | | | | | | | | | | | |

**Tabelle 2: Ergebnisse für die Bestimmung von Pendelhärte und Staubtrockenzeit**

| Zeitraum vor der Messung | Mittelwert Pendelhärte | | | | | | | | | | |
|---|---|---|---|---|---|---|---|---|---|---|---|
| | A* | B* | C* | D* | E* | F* | G* | H | I | J | K |
| 1 Tag | 97 | Flüssig | 115 | 116 | 113 | 116 | 113 | 126 | 139 | 109 | 108 |
| | | | | | | | | | | | |

| | Mittelwert Staubtrockenzeit (min.) | | | | | | | | | | |
|---|---|---|---|---|---|---|---|---|---|---|---|
| | A* | B* | C* | D* | E* | F* | G* | H | I | J | K |
| | 35 | Flüssig | 45 | 45 | 30 | 30 | 30 | 5 | 5 | 5 | 5 |

Aus Tabelle 2 wird ersichtlich, dass die Beschichtungsmittel, die die zinnfreien Katalysatoren enthalten (Proben C bis K), bei Raumtemperatur vergleichbar schnell oder sogar schneller härten als die Vergleichsbeispiele mit Zinnhaltigem Katalysator (Proben A* und B*). Gleiches gilt auch für die Pendelhärten, die bei den erfindungsgemäßen Beispielen jeweils höher sind. Alle aufgeführten erfindungsgemäßen Katalysatoren stellen somit eine Verbesserung gegenüber den bekannten Zinnhaltigen Katalysatoren dar.

Überraschenderweise konnte durch die Verwendung von Alkylammoniumhalogeniden (Proben J und K) zudem sogar eine Härtung von ethoxybasierten Addukten (2) bei Raumtemperatur erreicht werden, was mit den bekannten Zusammensetzungen (Probe B*) nicht möglich gewesen ist.

## Patentansprüche

1. Zusammensetzung, welche mindestens A) ein Addukt aus Isocyanatosilanen an Hydroxy-funktionelle Verbindungen, B) einen zinnfreien Katalysator und C) ein Aminosilan umfasst, wobei die Menge an Komponente C) 5 bis 30 Gew.-%, bezogen auf die gesamte Zusammensetzung, beträgt und der zinnfreie Katalysator B) ein Alkylammoniumhalogenid ist.

2. Zusammensetzung nach Anspruch 1, wobei es sich bei dem Isocyanatosilan um eine Verbindung der Formel (I)
OCN-(Alkyl)-Si(Alkoxy)₃ (I)
handelt, worin das Alkyl in vorstehender Formel (I) einer linearen oder verzweigten Alkylgruppe mit 1 bis 4 Kohlenstoffatomen und das Alkoxy in vorstehender Formel (I) jeweils unabhängig voneinander einer Methoxy-, Ethoxy-, Propoxy- oder Butoxy-Gruppe entspricht, wobei die drei Alkoxygruppen in der Verbindung der Formel (I) jeweils gleich oder unterschiedlich voneinander sein können.

3. Zusammensetzung nach Anspruch 2, wobei das Alkoxy in der Verbindung der Formel (I) jeweils unabhängig voneinander aus Methoxy- und Ethoxygruppen ausgewählt wird.

4. Zusammensetzung nach Anspruch 3, wobei die Alkoxygruppen, in dem Fall dass alle drei Alkoxygruppen gleich sind, keine Methoxygruppen sind.

5. Zusammensetzung nach einem der Ansprüche 1 oder 4, wobei die Hydroxy-funktionelle Verbindungen ausgewählt sind aus Mono-Alkoholen oder Polyolen, insbesondere Diolen, Triolen, Tetrolen und Hydroxylgruppen-haltige Polymeren.

6. Zusammensetzung nach einem der Ansprüche 1 bis 5, wobei das Verhältnis von OH-Gruppen aus den Hydroxy-funktionellen Verbindungen zu NCO-Gruppen aus den Isocyanatosilanen von 0,8 : 1 bis 1,2 : 1 beträgt.

7. Zusammensetzung nach einem der Ansprüche 1 bis 6, wobei der zinnfreie Katalysator B) ein Alkylammoniumfluorid ist.

8. Zusammensetzung nach Anspruch 7, wobei der zinnfreie Katalysator B) Tetramethylammoniumfluorid, Tetrapropylammoniumfluorid, Tetraethylammoniumfluorid, Tetrabutylammoniumfluorid oder eine Mischung davon ist.

9. Zusammensetzung nach einem der Ansprüche 1 bis 8, wobei das Aminosilan ein Aminoalkylsilan der allgemeinen Formel (III) ist
AₘSiYₙ (III)
worin A eine substituierte oder unsubstituierte Aminoalkylgruppe, eine substituierte oder unsubstituierte Diaminodialkylgruppe oder eine substituierte oder unsubstituierte Triaminotrialkylgruppe darstellt; die Gruppe Y jeweils unabhängig voneinander OH, OR', OCOR', OSiR'₃, Cl, Br, I oder NR'₂ ist; m gleich 1 oder 2; und n gleich 1, 2 oder 3 ist, mit der Maßgabe, dass m + n = 4 ist; wobei die Gruppe R' jeweils unabhängig voneinander Wasserstoff oder eine lineare oder verzweigte Alkyl-, Cycloalkyl-, Alkenyl-, Cycloalkenyl-, Alkinyl-, Cycloalkinyl-, Aryl- oder Heteroarylgruppe ist, die jeweils 1 bis 18 C-Atomen aufweist und jeweils ggf. substituiert ist.

10. 1K- oder 2K-Beschichtungsmittel, welches mindestens die Zusammensetzung nach einem der Ansprüche 1 bis 9 umfasst.

11. 1K- oder 2K-Beschichtungsmittel nach Anspruch 10, **dadurch gekennzeichnet, dass** es zusätzlich mindestens eine Bindemittel-Komponente und/oder mindestens einen Hilfs- und/oder Zusatzstoff und/oder mindestens ein Lösemittel enthält.

12. 1K- oder 2K-Beschichtungsmittel nach Anspruch 11, wobei der mindestens eine Hilfs- und/oder Zusatzstoff aus der Gruppe, bestehend aus Stabilisatoren, Lichtschutzmittel, Katalysatoren, Pigmente, Verlaufsmittel oder Rheologiehilfsmittel, wie z. B. sog. "sag control agents", Mikrogele, pyrogenes Siliciumdioxid, anorganische oder organische Farb- und/oder Effektpigmente oder Mischungen von zwei oder mehr davon, ausgewählt wird.

13. Verwendung des 1K- oder 2K-Beschichtungsmittels nach einem der Ansprüche 10 bis 12 zur Beschichtung von Holz, Kunststoff, Glas oder Metall.

14. Beschichtung, enthaltend das 1K- oder 2K-Beschichtungsmittel nach einem der Ansprüche 10 bis 12.

## Claims

1. Composition comprising at least A) an adduct of isocyanatosilanes with hydroxy-functional compounds, B) a tin-free catalyst and C) an aminosilane, wherein the amount of component C) is 5% to 30% by weight, based on the total composition, and the tin-free catalyst B) is an alkylammonium halide.

2. Composition according to Claim 1, wherein the isocyanatosilane is a compound of formula (I)
OCN-(alkyl)-Si(alkoxy)₃ (I),
in which the alkyl in formula (I) above corresponds to a linear or branched alkyl group having 1 to 4 carbon atoms and the alkoxy in formula (I) above in each case independently corresponds to a methoxy, ethoxy, propoxy or butoxy group, wherein the three alkoxy groups in the compound of formula (I) may in each case be identical or different from one another.

3. Composition according to Claim 2, wherein the alkoxy in the compound of formula (I) is in each case independently selected from methoxy and ethoxy groups.

4. Composition according to Claim 3, wherein the alkoxy groups, in the case that all three alkoxy groups are identical, are not methoxy groups.

5. Composition according to either of Claims 1 and 4, wherein the hydroxy-functional compounds are selected from monoalcohols or polyols, especially diols, triols, tetrols and hydroxyl group-containing polymers.

6. Composition according to any of Claims 1 to 5, wherein the ratio of OH groups of the hydroxy-functional compounds to NCO groups of the isocyanatosilanes is from 0.8: 1 to 1.2: 1.

7. Composition according to any of Claims 1 to 6, wherein the tin-free catalyst B) is an alkylammonium fluoride.

8. Composition according to Claim 7, wherein the tin-free catalyst B) is tetramethylammonium fluoride, tetrapropylammonium fluoride, tetraethylammonium fluoride, tetrabutylammonium fluoride or a mixture thereof.

9. Composition according to any of Claims 1 to 8, wherein the aminosilane is an aminoalkylsilane of the general formula (III)
AₘSiYₙ (III)
in which A is a substituted or unsubstituted aminoalkyl group, a substituted or unsubstituted diaminodialkyl group or a substituted or unsubstituted triaminotrialkyl group; the group Y is in each case independently OH, OR', OCOR', OSiR'₃, Cl, Br, I or NR'₂; m is 1 or 2; and n is 1, 2 or 3, with the proviso that m + n = 4; wherein the group R' is in each case independently hydrogen or a linear or branched alkyl, cycloalkyl, alkenyl, cycloalkenyl, alkynyl, cycloalkynyl, aryl or heteroaryl group, which in each case comprises 1 to 18 carbon atoms and is in each case optionally substituted.

10. 1K or 2K coating composition comprising at least the composition according to any of Claims 1 to 9.

11. 1K or 2K coating composition according to Claim 10, **characterized in that** it additionally comprises at least one binder component and/or at least one auxiliary and/or additive and/or at least one solvent.

12. 1K or 2K coating composition according to Claim 11, wherein the at least one auxiliary and/or additive is selected from the group consisting of stabilizers, light stabilizers, catalysts, pigments, levelling agents or rheological assistants, such as what are known as "sag control agents", microgels, fumed silicon dioxide, inorganic or organic colour pigments and/or effect pigments or mixtures of two or more thereof.

13. Use of the 1K or 2K coating composition according to any of Claims 10 to 12 for coating wood, plastic, glass or metal.

14. Coating comprising the 1K or 2K coating composition according to any of Claims 10 to 12.

## Revendications

1. Composition qui comprend au moins A) un produit d'addition d'isocyanatosilanes sur des composés à fonctionnalité hydroxy, B) un catalyseur exempt d'étain et C) un aminosilane, la quantité de composant C) représentant 5 à 30 % en poids par rapport à la totalité de la composition et le catalyseur exempt d'étain B) étant un halogénure d'alkylammonium.

2. Composition selon la revendication 1, l'isocyanatosilane étant un composé de formule (I)
OCN-(alkyl)-Si(alcoxy)₃ (I)
alkyle dans la formule (I) ci-dessus correspondant à un groupe alkyle linéaire ou ramifié comprenant 1 à 4 atomes de carbone et alcoxy dans la formule (I) ci-dessus correspondant, à chaque fois indépendamment, à un groupe méthoxy, éthoxy, propoxy ou butoxy, les trois groupes alcoxy dans le composé de formule (I) pouvant à chaque fois être identiques ou différents les uns des autres.

3. Composition selon la revendication 2, alcoxy dans le composé de formule (I) étant choisi, à chaque fois indépendamment, parmi les groupes méthoxy et éthoxy.

4. Composition selon la revendication 3, les groupes alcoxy, dans le cas où les trois groupes alcoxy sont identiques, n'étant pas des groupes méthoxy.

5. Composition selon l'une des revendications 1 ou 4, les composés à fonctionnalité hydroxy étant choisis parmi les monoalcools ou les polyols, en particulier les diols, les triols, les tétraols et les polymères contenant des groupes hydroxyle.

6. Composition selon l'une des revendications 1 à 5, le rapport des groupes OH des composés à fonctionnalité hydroxy aux groupes NCO des isocyanatosilanes valant 0,8:1 à 1,2:1.

7. Composition selon l'une des revendications 1 à 6, le catalyseur exempt d'étain B) étant un fluorure d'alkylammonium.

8. Composition selon la revendication 7, le catalyseur exempt d'étain B) étant le fluorure de tétraméthylammonium, le fluorure de tétrapropylammonium, le fluorure de tétraéthylammonium, le fluorure de tétrabutylammonium ou un mélange de ceux-ci.

9. Composition selon l'une des revendications 1 à 8, l'aminosilane étant un aminoalkylsilane de formule générale (III)
AₘSiYₙ (III)
A représentant un groupe aminoalkyle substitué ou non substitué, un groupe diaminodialkyle substitué ou non substitué ou un groupe triaminotrialkyle substitué ou non substitué ; le groupe Y représentant, à chaque fois indépendamment, OH, OR', OCOR', OSiR'₃, Cl, Br, I ou NR'₂ ; m valant 1 ou 2 ; et n valant 1, 2 ou 3, sous réserve que m + n = 4 ; le groupe R' représentant, à chaque fois indépendamment, hydrogène ou un groupe alkyle, cycloalkyle, alcényle, cycloalcényle, alcynyle, cycloalcynyle, aryle ou hétéroaryle, linéaire ou ramifié, qui présente à chaque fois 1 à 18 atomes de carbone et qui est à chaque fois, le cas échéant, substitué.

10. Agent de revêtement à 1 ou 2 composants, qui comprend au moins la composition selon l'une des revendications 1 à 9.

11. Agent de revêtement à 1 ou 2 composants selon la revendication 10, **caractérisé en ce qu'**il contient en plus au moins un composant liant et/ou au moins un adjuvant et/ou additif et/ou au moins un solvant.

12. Agent de revêtement à 1 ou 2 composants selon la revendication 11, ledit au moins un adjuvant et/ou additif étant choisi dans le groupe constitué par les stabilisants, les agents de protection contre la lumière, les catalyseurs, les pigments, les agents d'étalement ou les adjuvants de rhéologie, comme par exemple ce qu'on appelle des "sag control agents" (agents anticoulures), les microgels, le dioxyde de silicium pyrogène, les pigments inorganiques ou organiques colorants et/ou conférant un effet ou les mélanges de deux ou plus de ceux-ci.

13. Utilisation de l'agent de revêtement à 1 ou 2 composants selon l'une des revendications 10 à 12 pour le revêtement de bois, de matériau synthétique, de verre ou de métal.

14. Revêtement, contenant l'agent de revêtement à 1 ou 2 composants selon l'une des revendications 10 à 12.
